# EUROPEAN PATENT SPECIFICATION

(11) **EP 3 226 643 B1**
(45) Date of publication and mention of the grant of the patent: **20.11.2019**
(21) Application number: 15875058.8
(22) Date of filing: 08.12.2015
(51) Int. Cl.: H04W 74/08, H04W 84/12

(54) **DATA TRANSMISSION METHOD AND STATION**
DATENÜBERTRAGUNGSVERFAHREN UND STATION
PROCÉDÉ ET STATION DE TRANSMISSION DE DONNÉES

(30) Priority: 31.12.2014 CN 201410849794
(43) Date of publication of application: 04.10.2017
(73) Proprietor: ZTE Corporation, Shenzhen, Guangdong 518057 (CN)
(72) Inventor: JIANG, Anming, Shenzhen Guangdong 518057 (CN); SUN, Bo, Shenzhen Guangdong 518057 (CN); YANG, Liu, Shenzhen Guangdong 518057 (CN)
(74) Representative: Tiburzi, Andrea
(86) International application number: PCT/CN2015/096693
(87) International publication number: WO 2016/107380

(56) References cited:
- WO-A1-2013/134231
- CN-A- 102 076 106
- CN-A- 102 948 091
- CN-A- 103 828 262
- CN-A- 104 202 755
- Reza Hedayat ET AL: "Considerations for Adaptive CCA", IEEE-SA mentor , 6 November 2014 (2014-11-06), XP055421525, Piscataway, NJ USA Retrieved from the Internet: URL:https://mentor.ieee.org/802.11/dcn/14/ 11-14-1448-02-00ax-considerations-for-adap tive-cca.pptx [retrieved on 2017-11-03]
- JOHN SON (WILUS INSTITUTE): "Further Considerations on Enhanced CCA for 11ax ; 11-14-0847-01-00ax-further-considerations- on-enhanced-cca-for-11ax", IEEE DRAFT; 11-14-0847-01-00AX-FURTHER-CONSIDERATIONS- ON-ENHANCED-CCA-FOR-11AX, IEEE-SA MENTOR, vol. 802.11ax, no. 1, 15 July 2014 (2014-07-15), pages 1-12, XP068069563, PISCATAWAY, NJ USA
- REZA HEDAYAT (NEWRACOM): "Adaptive CCA for 11ax ; 11-14-1233-02-00ax-adaptive-cca-for-11ax", IEEE DRAFT; 11-14-1233-02-00AX-ADAPTIVE-CCA-FOR-11AX, IEEE-SA MENTOR, vol. 802.11ax, no. 2, 16 September 2014 (2014-09-16), pages 1-14, XP068071076, PISCATAWAY, NJ USA
- N.N: "IEEE Standard for Information technology--Telecommunications and information exchange between systems Local and metropolitan area networks--Specific requirements Part 11: Wireless LAN Medium Access Control (MAC) and Physical Layer (PHY) Specifications;IEEE Std 802.11-2012 (Revision of IEEE Std 802.1", IEEE STANDARD, IEEE, PISCATAWAY, NJ, USA, 29 March 2012 (2012-03-29), pages 824-844, XP002775290, ISBN: 978-0-7381-7211-8
- Matthew Fischer ET AL: "CID 205 BSSID Color Bits", IEEE-SA mentor , 18 September 2013 (2013-09-18), XP055421527, Piscataway, NJ USA Retrieved from the Internet: URL:https://mentor.ieee.org/802.11/dcn/13/ 11-13-1207-01-00ah-partial-aid-color-bits. pptx [retrieved on 2017-11-03]
- GRAHAM SMITH (DSP GROUP): "Dynamic Sensitivity Control for HEW ; 11-13-1290-01-0hew-dynamic-sensitivity-con trol-for-hew", IEEE DRAFT; 11-13-1290-01-0HEW-DYNAMIC-SENSITIVITY-CON TROL-FOR-HEW, IEEE-SA MENTOR, vol. 802.11 HEW, no. 1, 2 April 2014 (2014-04-02), pages 1-26, XP068068809, PISCATAWAY, NJ USA
- REZA HEDAYAT (NEWRACOM): "Perspectives on Spatial Reuse in 11ax ; 11-14-1580-00-00ax-perspectives-on-spatial -reuse-in-11ax", IEEE DRAFT; 11-14-1580-00-00AX-PERSPECTIVES-ON-SPATIAL -REUSE-IN-11AX, IEEE-SA MENTOR, vol. 802.11ax, 4 December 2014 (2014-12-04), pages 1-21, XP068071292, PISCATAWAY, NJ USA

## Description

### Technical Field

The present application relates to, but is not limited to, a Wireless Local Area Network (WLAN) technology.

### Background

At present, WLAN-based data communications have become very common, and global demands for WLAN coverage are increasing. The industrial specification group of the Institute of Electrical and Electronic Engineers (IEEE802.11) defines a series of standards such as 802.11a/b/g/n/ac in sequence to meet increasing communication demands, where a dynamic channel detection threshold, serving as an alternative technology for improving the channel multiplexing rate and solving the network efficiency, draws wide attention and research.

In common WLANs, a Basic Service Set (BSS) may be constituted by an Access Point (AP) and multiple Stations (STAs) associated therewith. At present, 802.11 supports two clear channel determination methods, namely physical carrier detection and virtual carrier detection, and after both the physical carrier detection and the virtual carrier detection determine a clear channel, allocated STAs can compete for sending. Herein, the physical carrier detection refers to a Clear Channel Assessment (CCA) channel detection technology, namely, the associated STAs perform detection through a signal strength over a medium, and determine whether a channel is busy or clear in combination with a CCA threshold value. Usually, the CCA threshold value is fixedly set according to receiving sensitivity under a minimum modulation coding rate to ensure a maximum receiving coverage range. The virtual carrier detection refers to as that when a third-party associated STA except two communication parties receives a radio frame whose receiving address is not the a third-party associated STA, a local Network Allocation Vector (NAV) value is set according to a value of a duration field in the radio frame, herein the NAV is a counter, and when the NAV is not zero, it is considered that the channel is busy and the a third-party associated STA does not compete for sending.

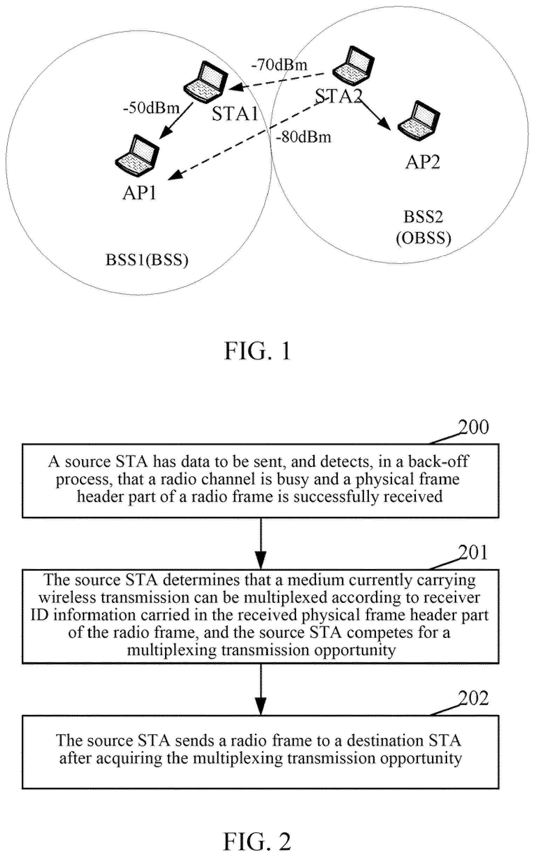

All the time, the CCA channel detection technology adopts a fixed threshold value as a standard for determining whether a channel is busy or clear. Thus, in some scenarios, channel access opportunities are reduced. As shown in FIG. 1, an STA1 is associated with an API, and an STA2 is associated with an AP2. In FIG.1, a solid single-arrow line represents that a radio frame is sent to a target receiving STA, and a dashed single-arrow line represents that a radio frame signal reaches a third-party STA. Although the STA1 and the STA2 can successfully send data to respective APs, when the STA1 sends a radio frame to the API, due to a conservative CCA threshold value (i.e., -82dBm), the signal strength of the STA1 monitored by the STA2 is - 70dBm, which is greater than the CCA threshold (-82dBm), and the STA2 considers that the channel is busy. However, actually, a signal sent to the AP2 by the STA2 cannot cause inference on receiving of the AP1 due to the fact that the strength of the signal from the STA2 reaching the AP1 is much lower than the strength of the signal from the STA1 reaching the API, and the AP2 can successfully receive the signal of the STA2. However, under this scenario, it is impossible for the STA2 to send a radio frame to the AP2, so multiplexing transmission is held back, that is to say, a too low CCA threshold reduces the sending opportunity of the STA2.

For the above situation, a concept of Dynamic Sensitivity Control (DSC)/dynamic channel detection is provided in a current discussion. That is, a channel detection threshold of an STA is no longer a fixed value, but an own channel detection threshold of an STA is dynamically adjusted according to a Received Signal Strength Indicator (RSSI) of a beacon frame of an AP. In another word, if the STA is closer to the AP, the channel detection threshold is greater, thus shielding a signal lower than a detection threshold, to improve the channel access efficiency of the STA. As shown in FIG. 1, before the STA1 sends data to the API, it is detected that a signal RSSI currently sent by the STA2 is -70dB, and the channel detection threshold is greater than - 70dB after the STA1 performs DSC. Therefore, the STA1 ignores the signal of the STA2, to access a channel and transmit data to the AP1.

However, when an STA adjusts a CCA detection threshold by means of DSC (here, the STA is also referred to as a DSC STA) to improve a channel access opportunity, a probability of collision with other equipment will certainly be increased. Particularly, when an STA out of a range that can be detected by the DSC STA is using a channel, the STA cannot be listened by the DSC STA, and if the DSC STA uses the channel at this time, data transmission of the STA may be interfered, and when the distance therebetween is smaller, the possibility of being interfered will be larger. When there are more similar STAs, the probability of collision will be larger, thus reducing the reliability of current transmission in the data transmission of the dynamic channel detection.

The document Reza Hedayat ET AL: "Considerations for Adaptive CCA", 2014-11-06, XP055421525, IEEE-SA mentor, Piscataway, NJ USA, the document JOHN SON (WILUS INSTITUTE): "Further considerations on enhanced CCA for 11ax; 11-14-0847-01-00ax-further-considerations-on-enhanced-cca-for-11ax", IEEE DRAFT; 11-14-0847-01-00ax-further-considerations-on-enhanced-cca-for-11ax, IEEE-SA MENTOR, PISCATAWAY, NJ USA, vol. 802.11ax, no.1, 2014-07-15, pages 1-12, XP068069563, and the document REZA HEDAYAT (NEWRACOM): "Adaptive CCA for 11ax; 11-14-1233-02-00AX-ADAPTIVE-CCA-FOR-11AX, IEEE-SA MENTOR, PISCATAWAY, NJ USA, vol.802.11ax, no.2, 2014-09-16, pages 1-14, XP068071076", have disclosed the related art of the present invention.

### Summary

The following is a summary of a subject described herein in detail. The summary is not intended to limit the scope of protection of claims.

The present document provides a data transmission method and an STA, capable of improving a multiplexing transmission opportunity in data transmission of dynamic channel detection and ensuring the reliability of current transmission.

The present invention provides a data transmission method according to the method independent claims and a station according to the apparatus independent claim.

In an exemplary embodiment, the receiver ID information includes one or more pieces of the following information: a BSS color, a Basic Service Set Identification (BSSID), an Association ID (AID), part of the BSSID and part of the AID.

In an exemplary embodiment, that the source STA sends the radio frame to a destination STA includes:
the source STA sends a multiplexing transmission request to the destination STA, and sends the radio frame carrying data to the destination STA after correctly receiving a multiplexing transmission response frame from the destination STA;
or, the source STA directly sends the radio frame carrying data to the destination STA.

In an exemplary embodiment, before a source STA has data to be sent, and detects, in a back-off process, that a radio channel is busy and a physical frame header part of a radio frame is successfully received, the method further includes: the source STA monitors and parses a received radio frame, and records a sender ID and/or sender address of the monitored radio frame in a surrounding STA information list of the source STA.

In an exemplary embodiment, that the source STA monitors and parses a received radio frame and records a sender ID and/or sender address of the monitored radio frame in a surrounding STA information list of the source STA includes:
the source STA monitors and parses a received Request to Send (RTS) frame, and identifies, according to the received RTS frame, an ID and/or address of a corresponding STA that sends the RTS frame, and an ID and/or address of an STA that receives the RTS frame.

In an exemplary embodiment, after the source STA monitors and parses a received RTS frame, and identifies, according to the received RTS frame, an ID and/or address of a corresponding STA that sends the RTS frame, and an ID and/or address of an STA that receives the RTS frame, the method further includes: recording a sender ID and/or sender address allowed to send a Clear To Send (CTS) radio frame and corresponding to the monitored RTS frame.

In an exemplary embodiment, before recording a sender ID and/or sender address allowed to send a CTS radio frame and corresponding to the monitored RTS frame, the method further includes:
the source STA acquires a sending power of the monitored CTS frame, and a reaching power of the monitored CTS frame reaching the source STA, and the acquired reaching power is greater than a preset threshold.

In an exemplary embodiment, before recording a sender ID and/or sender address of the monitored radio frame, the method further includes:
the source STA acquires a sending power of a sender of the monitored radio frame, and a reaching power of the monitored radio frame reaching the source STA, and the acquired reaching power is greater than a preset threshold.

In an exemplary embodiment, the source STA acquires a transmission time length of the radio frame by decoding the received physical frame header of the radio frame.

In an exemplary embodiment, transmission multiplexing transmission time length of the source STA does not exceed a transmission ending time point of the acquired radio frame.

In an exemplary embodiment, that the source STA determines that a medium currently carrying wireless transmission can be multiplexed according to receiver ID information carried in the received physical frame header part of the radio frame includes:
the source STA detects that a target receiving STA of the radio frame currently transmitted is not in the surrounding STA information list of the source STA.

In an exemplary embodiment, a multiplexing transmission request frame carries an ID and/or sender address of the target receiving STA carrying the radio frame currently transmitted.

In an exemplary embodiment, that the source STA competes for a multiplexing transmission opportunity includes:
the source STA performs back-off by using a dynamic CCA threshold, and acquires the multiplexing transmission opportunity after back-off is ended;
or, the source STA acquires the multiplexing transmission opportunity after a random time length.

In an exemplary embodiment, before the source STA starts to compete for the multiplexing transmission opportunity, a local channel appointment timer of the source STA is 0.

Also provided is a data transmission method including:
a destination STA receives a multiplexing transmission request; and
the destination STA detects that a medium currently carrying wireless transmission can be multiplexed, and returns a multiplexing transmission response frame to a source STA.

In an exemplary embodiment, before a destination STA receives a multiplexing transmission request, the method further includes: the destination STA monitors and parses a received radio frame, and records a sender ID and/or sender address of the monitored radio frame in a surrounding STA information list of the destination STA.

In an exemplary embodiment, before recording a sender ID and/or sender address of the monitored radio frame, the method further includes:
the destination STA acquires a sending power of a sender of the monitored radio frame, and a reaching power of the monitored radio frame reaching the destination STA, and the acquired reaching power is greater than a preset threshold.

In an exemplary embodiment, that the destination STA detects that a medium currently carrying wireless transmission can be multiplexed includes:
the destination STA detects that a target receiving STA of the radio frame currently transmitted is not in the surrounding STA information list of the destination STA.

Also provided is an STA including: a recording module, a first determination module and a transmission module.

The recording module is configured to, in a back-off process, detect that a radio channel is busy and a physical frame header part of a radio frame is successfully received when there are data to be sent.

The first determination module is configured to: determine that a medium currently carrying wireless transmission can be multiplexed according to receiver ID information carried in the received physical frame header part of the radio frame, compete for a multiplexing transmission opportunity, and notify the transmission module when acquiring the multiplexing transmission opportunity.

The transmission module is configured to receive a notification from the first determination module, and send a radio frame to a destination STA.

In an exemplary embodiment, the first determination module is configured to send a multiplexing transmission request to the destination STA, and notify the transmission module after correctly receiving a multiplexing transmission response frame from the destination STA; and
the STA further includes: a second determination module, configured to receive a multiplexing transmission request frame from the source STA, detect that the medium currently carrying the wireless transmission can be multiplexed, and return the multiplexing transmission response frame to the source STA.

In an exemplary embodiment, the recording module is configured to parse the received radio frame, and record a sender ID and/or sender address of the monitored radio frame in a surrounding STA information list.

In an exemplary embodiment, the recording module is further configured to acquire a sending power of a sender of the monitored radio frame, and a reaching power of the monitored radio frame reaching the source STA, and the acquired reaching power is greater than a preset threshold.

In an exemplary embodiment, the first determination module is configured to detect that the medium currently carrying the wireless transmission can be multiplexed when detecting that a target receiving STA of the radio frame currently transmitted is not in the surrounding STA information list of the source STA.

In an exemplary embodiment, the second determination module is configured to return the multiplexing transmission response frame to the source STA when detecting that a target receiving STA of the radio frame currently transmitted is not in the surrounding STA information list of the source STA.

Also provided is a computer-readable storage medium storing a computer-executable instruction, and the computer-executable instruction is used for executing any one of the above methods.

Compared with the existing art, the technical solution in the present application includes: a source STA has data to be sent, and detects, in a back-off process, that a radio channel is busy and a physical frame header part of a radio frame is successfully received; the source STA determines that a medium currently carrying wireless transmission can be multiplexed according to receiver ID information carried in the received physical frame header part of the radio frame, and the source STA competes for a multiplexing transmission opportunity; and the source STA sends a radio frame to a destination STA after acquiring the multiplexing transmission opportunity. According to the embodiments of the present invention, in data transmission of dynamic channel detection, two parties for a multiplexing transmission respectively determine whether the medium currently carrying the wireless transmission can be multiplexed, and when detecting that the medium currently carrying the wireless transmission can be multiplexed, the multiplexing transmission will be performed. Thus, on one hand, the multiplexing transmission opportunity is improved, and on the other hand, the reliability of current transmission is ensured.

After the drawings and the detailed descriptions are read and understood, other aspects can be understood.

### Brief Description of Drawings

FIG. 1 is a diagram of an example for a channel detection threshold situation in the related art.
FIG. 2 is a flowchart of a data transmission method according to an embodiment of the present invention.
FIG. 3 is a structure diagram of an STA according to an embodiment of the present invention.
FIG. 4 is a diagram of an example for data transmission according to an embodiment of the present invention.

### Detailed Description

The embodiments of the present invention will be illustrated hereinbelow with the drawings in detail. It is important to note that embodiments in the present application and characteristics in the embodiments may be mutually combined under the condition of no conflicts.

FIG. 2 is a flowchart of a data transmission method according to an embodiment of the present invention. As shown in FIG. 2, the method at least includes the steps as follows.

In step 200, a source STA has data to be sent, and detects, in a back-off process, that a radio channel is busy and the source STA successfully receives a physical frame header part of a radio frame.

In step 201, the source STA determines that a medium currently carrying wireless transmission can be multiplexed according to receiver ID information carried in the received physical frame header part of the radio frame, and the source STA competes for a multiplexing transmission opportunity.

The receiver ID information may include one or more pieces of the following information: a BSS color, a BSSID, an Association ID (AID), part of the BSSID and part of the AID and so on.

Before the step 200, the method may further include: the source STA monitors and parses the received radio frame, and records sender information of the monitored radio frame, such as a sender ID and/or a sender address, in a surrounding STA information list of the source STA.

In an exemplary embodiment, before the source STA records a sender ID and/or sender address of the monitored radio frame, the method further includes:
the source STA acquires a sending power of the sender of the monitored radio frame, and a reaching power of the monitored radio frame reaching the source STA, and determines that the acquired reaching power is greater than a preset threshold.

The surrounding STA information list at least includes: the sender ID and/or sender address of the monitored radio frame, and may further include: the sending power of the sender of the monitored radio frame, the reaching power of the monitored radio frame reaching the local source STA, and the like, herein these parameters are in one-to-one correspondence to the sender ID and/or sender address of the monitored radio frame.

It is important to note that every time the source STA receives a radio frame, it is indicated that a sender of the radio frame is around the source STA. The source STA can receive the radio frame that is sent by the sender of the radio frame only when the sender of the radio frame is around the source STA.

In another embodiment, that the source STA monitors and parses the received radio frame and records the sender ID and/or sender address of the monitored radio frame in the surrounding STA information list of the source STA includes:
the source STA monitors and parses a received RTS frame, and identifies, according to the received RTS frame, an ID and/or address of a corresponding STA that sends the RTS frame, and an ID and/or address of an STA that receives the RTS frame.

In addition, the source STA records a sender ID and/or sender address allowed to send a CTS radio frame and corresponding to the monitored RTS frame.

Herein, before recording a sender ID and/or sender address allowed to send a CTS radio frame and corresponding to the monitored RTS frame, the method further includes:
the source STA acquires a sending power of the monitored CTS frame, and a reaching power of the monitored CTS frame reaching the source STA, and the acquired reaching power is greater than a preset threshold.

That the source STA detects that a medium currently carrying wireless transmission can be multiplexed in the step includes:
the source STA detects that a target receiving STA of the radio frame currently transmitted is not in the surrounding STA information list of the source STA, and detects that the medium currently carrying the wireless transmission can be multiplexed. A multiplexing transmission request frame carries an ID and/or sender address of the target receiving STA carrying the radio frame currently transmitted.

Herein, the source STA can compete for the multiplexing transmission opportunity by means of a competition back-off process. For example, back-off is performed by using a dynamic CCA threshold, and the multiplexing transmission opportunity is acquired after back-off is ended. Or, the source STA may acquire the multiplexing transmission opportunity after a random time length, herein the random time length may be zero.

Before the source STA competes for the multiplexing transmission opportunity, a local channel appointment timer of the source STA is 0.

In step 202, the source STA sends a radio frame to a destination STA after acquiring the multiplexing transmission opportunity.

The step includes: the source STA sends a multiplexing transmission request to the destination STA, and sends the radio frame carrying data to the destination STA after correctly receiving a multiplexing transmission response frame from the destination STA;
or, the source STA directly sends the radio frame carrying data to the destination STA.

The source STA acquires a transmission time length of the radio frame by decoding the received physical frame header of the radio frame. The multiplexing transmission time length of the source STA does not exceed a transmission ending time point of the acquired radio frame.

The method in the embodiments of the present invention further includes:
a destination STA receives a multiplexing transmission request; and
the destination STA detects that a medium currently carrying wireless transmission can be multiplexed, and returns a multiplexing transmission response frame to a source STA.

Before a destination STA receives a multiplexing transmission request, the method further includes: the destination STA monitors and parses a received radio frame, and records a sender ID and/or sender address of the monitored radio frame in a surrounding STA information list of the destination STA.

Before the destination STA records a sender ID and/or sender address for the monitored radio frame, the method further includes:
the destination STA acquires a sending power of a sender of the monitored radio frame, and a reaching power of the monitored radio frame reaching the destination STA, and the acquired reaching power is greater than a preset threshold.

That the destination STA detects that a medium currently carrying wireless transmission can be multiplexed in the step includes:
the destination STA detects that a target receiving STA of the radio frame currently transmitted is not in the surrounding STA information list of the destination STA.

If the destination STA is interfered by the radio frame currently received and cannot monitor a multiplexing transmission request frame from the source STA, multiplexing transmission fails to be established, and the flow is ended.

A sender carries sending power information in a service field of the sent radio frame.

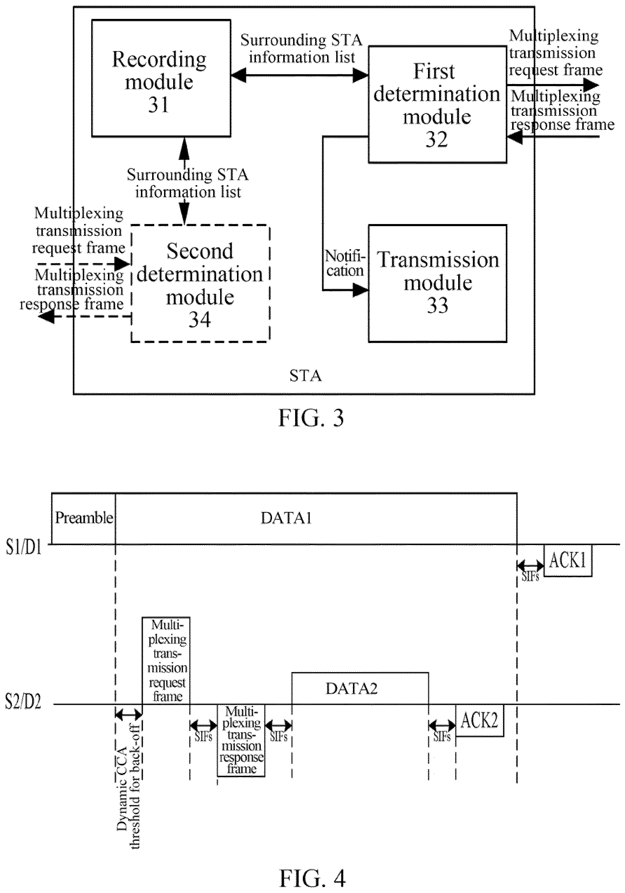

FIG. 3 is a structure diagram of an STA according to an embodiment of the present invention. As shown in FIG. 3, the STA at least includes: a recording module 31, a first determination module 32 and a transmission module 33.

The recording module 31 is configured to, when there are data to be sent, in a back-off process detect that a radio channel is busy and a physical frame header part of a radio frame is successfully received.

The first determination module 32 is configured to, determine that a medium currently carrying wireless transmission can be multiplexed according to receiver ID information carried in the received physical frame header part of the radio frame, compete for a multiplexing transmission opportunity, and notify the transmission module when acquiring the multiplexing transmission opportunity.

The transmission module 33 is configured to receive a notification from the first determination module, and send a radio frame to a destination STA.

The recording module 31, the first determination module 32 and the transmission module 33 are modules of the STA serving as a source STA.

The first determination module 32 is configured to send a multiplexing transmission request to the destination STA, and notify the transmission module after correctly receiving a multiplexing transmission response frame from the destination STA.

The STA in the embodiments of the present invention further includes: a second determination module 34, configured to, receive a multiplexing transmission request frame from the source STA, detect that the medium currently carrying the wireless transmission can be multiplexed, and return the multiplexing transmission response frame to the source STA.

The second determination module 34 is a module of the STA serving as a destination STA.

Herein,
the recording module 31 is configured to parse the received radio frame, and record a sender ID and/or sender address of the monitored radio frame in a surrounding STA information list of itself.

The recording module 31 is further configured to acquire a sending power of a sender of the monitored radio frame, and a reaching power of the monitored radio frame reaching the source STA, and the acquired reaching power is greater than a preset threshold.

Herein, the first determination module 32 is configured to detect that the medium currently carrying the wireless transmission can be multiplexed when detecting that a target receiving STA of the radio frame currently transmitted is not in the surrounding STA information list of the source STA.

The second determination module 34 is configured to return the multiplexing transmission response frame to the source STA when detecting that a target receiving STA of the radio frame currently transmitted is not in the surrounding STA information list of the destination STA.

In a first embodiment and in combination with FIG. 4, it is supposed that an STA S1 and an STA D1 are a first STA 1 and a destination STA 1 which are currently transmitting DATA1 (data 1), and an STA S2 and an STA D2 are a first STA 2 and a destination STA 2 which are competing for multiplexing, and the S2 is performing a back-off process. Herein, the S2 and the D2 collect their surrounding STA addresses and establish surrounding STA information lists respectively. In the first embodiment, if the D1 is not in the surrounding STA list of the S2, that is to say, the S2 supposes that it is far away from the D1, then the S2 will suspend the current back-off process and start to attempt multiplexing transmission.

When the S1 transmits the DATA1 to the D1, the S2 discovers that a receiving STA of DATA1, namely the D1, is not in the surrounding STA information list of S2 after parsing a preamble of the DATA1, and then the S2 starts to perform back-off by using a dynamic CCA threshold after acquiring the transmission time length of DATA1, and sends a multiplexing transmission request frame to the D2 after back-off is ended.

Here, it is important to note that if the DATA1 power received by the S2 is greater than the dynamic CCA threshold, back-off is not performed, and the flow is ended. A local NAV may be updated according to the transmission time length of the radio frame in the existing art.

The multiplexing transmission request frame carries information about the D1, such as address information of the D1.

As shown in FIG. 4, after receiving the multiplexing transmission request frame from the S2, the D2 discovers that the D1 is not in the surrounding STA information list of the D2, and returns a multiplexing transmission response frame to S2; and after receiving the multiplexing transmission response frame from the D2, the S2 sends DATA2 to the D2, and the time length of communication with the D2 does not exceed a transmission ending time point of the DATA1.

It is important to note that if the D2 is interfered by the DATA1 and cannot monitor the multiplexing transmission request frame, the present multiplexing transmission fails to be established, and the flow is ended.

In a second embodiment and in combination with FIG. 4, it is supposed that an STA S1 and an STA D1 are a first STA 1 and a destination STA 1 which are currently transmitting DATA1, and an STA S2 and an STA D2 are a first STA 2 and a destination STA 2 which are competing for multiplexing. Herein, the S2 and the D2 periodically collect their surrounding STA addresses according to preset time and respectively establish surrounding STA information lists, including parameters such as address information of surrounding STAs, a sending power and a reaching power and so on. In the present embodiment, it is supposed that multiplexing transmission parties namely the S2 and the D2 are not symmetric to current communication parties namely the S1 and the D1 in power.

When the S1 transmits the DATA1 to the D1, the S2 discovers that a receiving STA of DATA1, namely the D1, is in the surrounding STA information list of the S2 after parsing a preamble of the DATA1. At this time, if a reaching power of a signal, sent by the S2, reaching the D1 is lower than a minimum demodulation threshold (-82dBm), the S2 starts to perform back-off by using a dynamic CCA threshold after acquiring a transmission time length of DATA1, and sends a multiplexing transmission request frame to the D2 after back-off is ended.

Here, it is important to note that if the power of DATA1 received by the S2 is greater than the dynamic CCA threshold, back-off is not performed, and the flow is ended. A local NAV may be updated according to the transmission time length of a radio frame in the existing art.

The multiplexing transmission request frame carries information, such as address information of the D1, the sending power of the S1, the sending power of the S2, and the demodulation threshold of the S2 and so on.

As shown in FIG. 4, after receiving the multiplexing transmission request frame from the S2, the D2 discovers that the D1 is in the surrounding STA information list of the D2, adjusts its own sending power according to the sending power of the S2 and the demodulation threshold of the S2 carried in the multiplexing transmission request frame, and returns a multiplexing transmission response frame if the adjusted sending power is lower than a preset threshold; and after receiving the multiplexing transmission response frame from the D2, the S2 sends DATA2 to the D2, and the time length of communication with the D2 does not exceed a transmission ending time point of the DATA1.

It is important to note that if the D2 is interfered by the DATA1 and cannot monitor the multiplexing transmission request frame, the present multiplexing transmission fails to be established, and the flow is ended.

A third embodiment elaborates a multiplexing transmission process inside a BSS. When an AP transmits DATA1 to an STA1, an STA2, an STA3, the AP and the STA1 are located in the same BSS, and the STA2 desires to transmit DATA2 to the STA3 by multiplexing transmission. If the STA2 discovers that a receiving STA of DATA1, namely the STA1, is not in a surrounding STA information list of the STA2 after parsing a preamble of the DATA1, the S2 starts to perform back-off by using a dynamic CCA threshold after acquiring a transmission time length of DATA1, and sends a multiplexing transmission request frame to the D2 after back-off is ended.

Here, it is important to note that if the power of DATA1 received by the STA2 is greater than the dynamic CCA threshold, back-off is not performed, and the flow is ended. A local NAV may be updated according to a transmission time length of a radio frame in the existing art.

The multiplexing transmission request frame carries information about the STA1 such as address information of the STA1.

After receiving the multiplexing transmission request frame from the STA2, the STA3 discovers that the STA1 is not in the surrounding STA information list of the STA3, and returns a multiplexing transmission response frame to the STA2; and after receiving the multiplexing transmission response frame from the STA3, the STA2 sends DATA2 to the STA3, and a time length of communication with the STA3 does not exceed a transmission ending time point of the DATA1.

A fourth embodiment elaborates a multiplexing transmission process outside a BSS. When an AP1 transmits DATA1 to an STA1, an AP2 discovers that a receiving STA of DATA1, namely the STA1, is not in an surrounding STA information list of the AP2 after parsing a preamble of the DATA1, and then the AP2 starts to perform back-off by using a dynamic CCA threshold after acquiring a transmission time length of DATA1, and sends a multiplexing transmission request frame to an STA2 after back-off is ended.

Here, it is important to note that if the power of DATA1 received by the AP2 is greater than the dynamic CCA threshold, back-off is not performed, and the flow is ended. A local NAV may be updated according to a transmission time length of a radio frame in the existing art.

The multiplexing transmission request frame carries information about the STA1 such as address information of the STA1.

After receiving the multiplexing transmission request frame from the STA2, an STA3 discovers that the STA1 is not in the surrounding STA information list of the STA3, and returns a multiplexing transmission response frame to the STA2; and after receiving the multiplexing transmission response frame from the STA3, the STA2 sends DATA2 to the STA3, and a time length of communication with the STA3 does not exceed a transmission ending time point of the DATA1.

A fifth embodiment elaborates a process where a source STA performs multiplexing transmission with a next radio frame after receiving a radio frame currently transmitted. When an S1 transmits DATA1 to a D1, an S2 discovers that a receiving STA of DATA1, namely the D1, is not in a surrounding STA information list of the S2 after parsing a preamble of the DATA1, and DATA1 transmission time length is not enough for the S2 to send DATA3 to an S3. But, the S2 learns that the S1 will send DATA2 to the D1 subsequently after parsing the DATA1, so the S2 performs back-off by using a dynamic CCA threshold, and the STA S2 parses a preamble in the DATA2, acquires a transmission time length of DATA2, and sends a multiplexing transmission request frame to the STA D2 after back-off is ended. Back-off is performed by using the dynamic CCA threshold after the transmission time length of DATA2 is acquired, and the multiplexing transmission request frame is sent to the STA D2 after back-off is ended.

Here, it is important to note that if the power of DATA2 received by the S2 is greater than the dynamic CCA threshold, back-off is not performed, and the flow is ended. A local NAV may be updated according to a transmission time length of a radio frame in the existing art.

The multiplexing transmission request frame carries information about the D1 such as address information of the D1.

After receiving the multiplexing transmission request frame from the S2, the D2 discovers that the D1 is not in the surrounding STA information list of the D2, and returns a multiplexing transmission response frame to the S2; and after receiving the multiplexing transmission response frame from the D2, the S2 sends DATA3 to the D2, and a time length of communication with the D2 does not exceed a transmission ending time point of the DATA2.

In a sixth embodiment, an S2 and a D2 collect their surrounding STA addresses and respectively establish surrounding STA information lists, including address information of surrounding STAs. In the collection process, both an S1 and a D1 have sent radio frames, and after receiving the radio frames sent by the S1 and the D1, the S2 and the D2 discover that reaching powers are lower than a preset threshold, so address information of the S2 and the D2 is not recorded in the surrounding STA information lists. Then, the STA S1 and the STA D1 are a first STA 1 and a destination STA 1 which are currently transmitting DATA1, and the STA S2 and the STA D2 are a first STA 2 and a destination STA 2 which are competing for multiplexing. Herein, the S2 and the D2 periodically collect their surrounding STA addresses according to preset time and respectively establish surrounding STA information lists. In the first embodiment, if the D1 is not in the surrounding STA list of the S2, that is to say, the S2 considers that it is far away from the D1, the S2 will start to attempt multiplexing transmission.

When the S1 transmits DATA1 to the D1, the S2 discovers that a receiving STA of DATA1, namely the D1, is not in the surrounding STA information list of the S2 after parsing a preamble of the DATA1, and the S2 starts to perform back-off by using a dynamic CCA threshold after acquiring a transmission time length of DATA1, and sends a multiplexing transmission request frame to the D2 after back-off is ended.

Here, it is important to note that if the power of DATA1 received by the S2 is greater than the dynamic CCA threshold, back-off is not performed, and the flow is ended. A local NAV may be updated according to a transmission time length of a radio frame in the existing art.

The multiplexing transmission request frame carries information about the D1 such as address information of the D1.

As shown in FIG. 4, after receiving the multiplexing transmission request frame from the S2, the D2 discovers that the D1 is not in the surrounding STA information list of the D2, and returns a multiplexing transmission response frame; and after receiving the multiplexing transmission response frame from the D2, the S2 sends DATA2 to the D2, and a time length of communication with the D2 does not exceed a transmission ending time point of the DATA1.

It is important to note that if the D2 is interfered by the DATA1 and cannot monitor the multiplexing transmission request frame, the present multiplexing transmission fails to be established, and the flow is ended.

In a seventh embodiment, to send data DATA1 to an STA D1 to compete for a channel sending opportunity first, an STA S1 sends an RTS frame to the STA D1, and the STA D1 returns a CTS frame to the STA S1 after receiving the RTS frame.

An STA S2 monitors the RTS frame and identifies addresses of the STA S1 and the STA D1 carried in the RTS frame. If a receiving power of the identified RTS frame is greater than a preset threshold, the STA S2 records the STA S1. If the receiving power of the identified RTS frame is smaller than the preset threshold, the STA S2 does not record the STA S1.

If the STA S2 also monitors the CTS frame and a receiving power of the CTS frame is smaller than the preset threshold, the STA S2 does not record the STA D1. If the receiving power of the CTS frame is greater than the preset threshold, the STA S2 records the STA D1.

If the STA S2 monitors only the CTS frame, no record is made.

If the STA S2 monitors sending of a radio frame after monitoring the RTS frame for an interval of a 2^{∗}SIF+CTS frame, the STA S2 determines whether to start a multiplexing transmission process according to received physical frame header information.

The multiplexing transmission process includes dynamic channel detection and back-off processes.

Those of ordinary skilled in the art may understand that all or some of the steps of the above-mentioned embodiment may be implemented by using a computer program flow. The computer program may be stored in a computer-readable storage medium. The computer program is executed on a corresponding hardware platform (such as system, equipment, device or apparatus or the like). During execution, the computer program includes one of the steps of the method embodiment or a combination thereof.

In an exemplary embodiment, all or some of the steps of the above-mentioned embodiment may also be implemented by using an integrated circuit. These steps may be manufactured into integrated circuit modules respectively, or a plurality of modules or steps therein are manufactured into a single integrated circuit module.

The device/functional module/functional unit in the above-mentioned embodiment may be implemented by using a general computation device. They may be centralized on a single computation device or may be distributed on a network composed of a plurality of computation devices.

When the device/functional module/functional unit in the above-mentioned embodiment is implemented in a form of a software function module and is sold or used as an independent product, they may also be stored in a computer-readable storage medium. The above-mentioned computer-readable storage medium may be a read-only memory, a magnetic disk or an optical disk or the like.

### Industrial Applicability

According to the embodiments of the present invention, in data transmission of dynamic channel detection, two parties for a multiplexing transmission respectively determine whether a medium currently carrying wireless transmission can be multiplexed, and when detecting that the medium currently carrying the wireless transmission can be multiplexed, the multiplexing transmission will be performed. Thus, on one hand, a multiplexing transmission opportunity is improved, and on the other hand, the reliability of current transmission is ensured.

## Claims

1. A data transmission method, comprising:
detecting (200), by a source Station, STA, having data to be sent, that a radio channel is busy and a physical frame header part of a radio frame is successfully received in a back-off process;
determining (201), by the source STA, that a medium currently carrying wireless transmission can be multiplexed according to receiver Identification, ID, information carried in the received physical frame header part of the radio frame, and competing, by the source STA, for a multiplexing transmission opportunity; and
sending (202), by the source STA, a radio frame to a destination STA after acquiring the multiplexing transmission opportunity;
**characterized in that**:
wherein determining, by the source STA, that a medium currently carrying wireless transmission can be multiplexed according to receiver ID information carried in the received physical frame header part of the radio frame comprises:
detecting, by the source STA, that a receiver of the radio frame is not in a surrounding STA information list of the source STA;
sending, by the source STA, a multiplexing transmission request frame carrying the receiver ID information to the destination STA; and
receiving a multiplexing transmission response frame when the receiver of the radio frame is not in a surrounding STA information list of the destination STA;
sending, by the source STA, a radio frame to a destination STA comprises:
sending the radio frame carrying data to the destination STA.

2. The data transmission method according to claim 1, wherein the receiver ID information comprises one or more pieces of the following information: a Basic Service Set, BSS, color, a Basic Service Set Identification, BSSID, an Association ID, AID, part of the BSSID and part of the AID.

3. The data transmission method according to claim 1, wherein before detecting, by a source STA having data to be sent, that a radio channel is busy and a physical frame header part of a radio frame is successfully received in a back-off process, the method further comprises:
monitoring and parsing, by the source STA, a received radio frame, and recording a sender ID and/or sender address of the monitored radio frame in a surrounding STA information list of the source STA.

4. The data transmission method according to claim 3, wherein the monitoring and parsing, by the source STA, a received radio frame, and recording a sender ID and/or sender address of the monitored radio frame in a surrounding STA information list of the source STA comprises:
monitoring and parsing, by the source STA, a received Request to Send, RTS, frame, and identifying, according to the received RTS frame, an ID and/or address of a corresponding STA that sends the RTS frame, and an ID and/or address of an STA that receives the RTS frame;
and
wherein after monitoring and parsing, by the source STA, a received RTS frame, and identifying, according to the received RTS frame, an ID and/or address of a corresponding STA that sends the RTS frame, and an ID and/or address of an STA that receives the RTS frame, the method further comprises: recording a sender ID and/or sender address allowed to send a Clear To Send, CTS, radio frame and corresponding to the monitored RTS frame;
and
wherein before recording a sender ID and/or sender address allowed to send a CTS radio frame and corresponding to the monitored RTS frame, the method further comprises:
acquiring, by the source STA, a sending power of the monitored CTS frame, and a reaching power of the monitored CTS frame reaching the source STA, and the acquired reaching power being greater than a preset threshold.

5. The data transmission method according to claim 3, wherein before recording a sender ID and/or sender address of the monitored radio frame, the method further comprises:
acquiring, by the source STA, a sending power of a sender of the monitored radio frame, and a reaching power of the monitored radio frame reaching the source STA, and the acquired reaching power being greater than a preset threshold.

6. The data transmission method according to claim 1, further comprising: acquiring, by the source STA, a transmission time length of the radio frame by decoding the received physical frame header of the radio frame;
and
wherein a multiplexing transmission time length of the source STA does not exceed a transmission ending time point of the acquired radio frame.

7. The data transmission method according to claim 1, wherein competing, by the source STA, for a multiplexing transmission opportunity comprises:
performing, by the source STA, back-off by using a dynamic Clear Channel Assessment, CCA, threshold, and acquiring the multiplexing transmission opportunity after back-off is ended;
or, acquiring, by the source STA, the multiplexing transmission opportunity after a random time length.

8. A data transmission method, **characterized by** comprising:
receiving, by a destination Station, STA, a multiplexing transmission request carrying a receiver ID information of a radio frame from a source STA when the source STA detects that a receiver of the radio frame is not in a surrounding STA information list of the source STA; and
after discovering that the receiver of the radio frame is not in a surrounding STA information list of the destination STA, detecting that a medium currently carrying wireless transmission can be multiplexed, and returning a multiplexing transmission response frame to the source STA; and
receiving a radio frame carrying data from the source STA.

9. The data transmission method according to claim 8, wherein before receiving, by a destination STA, a multiplexing transmission request, the method further comprises: monitoring and parsing, by the destination STA, a received radio frame, and recording a sender Identification, ID, and/or sender address of the monitored radio frame in a surrounding STA information list of the destination STA;
and
wherein before recording a sender ID and/or sender address of the monitored radio frame, the method further comprises:
acquiring, by the destination STA, a sending power of a sender of the monitored radio frame, and a reaching power of the monitored radio frame reaching the destination STA, and the acquired reaching power being greater than a preset threshold.

10. A Station, STA, comprising: a recording module (31), a first determination module (32) and a transmission module (33), wherein
the recording module (31) is configured to, in a back-off process, detect that a radio channel is busy and a physical frame header part of a radio frame is successfully received when there are data to be sent;
the first determination module (32) is configured to, determine that a medium currently carrying wireless transmission can be multiplexed according to receiver Identification, ID, information carried in the received physical frame header part of the radio frame, compete for a multiplexing transmission opportunity, and notify the transmission module when acquiring the multiplexing transmission opportunity; and
the transmission module (33) is configured to receive a notification from the first determination module, and send a radio frame to a destination STA;
**characterized in that**:
the first determination module (32) is configured to detect that a receiver of the radio frame is not in a surrounding STA information list of the source STA, send a multiplexing transmission request frame carrying the receiver ID information to the destination STA, and receive a multiplexing transmission response frame when the receiver of the radio frame is not in a surrounding STA information list of the destination STA;
the transmission module (33) is configured to send the radio frame carrying data to the destination STA.

11. A computer-readable storage medium, in which a computer-executable instruction is stored, wherein the computer-executable instruction is used for executing the method according to any one of claims 1 to 9.

## Patentansprüche

1. Datenübertragungsverfahren, umfassend:
Erfassen (200) durch eine Quellstation, STA, mit zu sendenden Daten, dass ein Funkkanal belegt ist und ein physikalisches Rahmen-Kopfteil eines Funkrahmens erfolgreich in einem Back-Off-Prozess empfangen wird;
Bestimmen (201) durch die Quellen-STA, dass ein Medium, das gegenwärtig eine drahtlose Übertragung ausführt, gemäß der Empfängeridentifikation, ID, - Information, die in dem empfangenen physikalischen Rahmen-Kopfteil des Funkrahmens enthalten ist, gemultiplext werden kann, und Konkurrieren durch die Quellen-STA, um eine Multiplex-Übertragungsmöglichkeit; und
Senden (202) eines Funkrahmens durch die Quellen-STA an eine Ziel-STA, nachdem die Multiplex-Übertragungsmöglichkeit erlangt wurde;
**dadurch gekennzeichnet, dass**:
wobei das Bestimmen durch die Quellen-STA, dass ein Medium, das gegenwärtig eine drahtlose Übertragung ausführt, gemäß Empfänger-ID-Informationen, die in dem empfangenen physikalischen Rahmen-Kopfteil des Funkrahmens enthalten sind, gemultiplext werden kann, Folgendes umfasst:
Erfassen durch die Quellen-STA, dass sich ein Empfänger des Funkrahmens nicht in einer Umgebungs-STA-Informationsliste der Quellen-STA befindet;
Senden eines Multiplex-Übertragungsanforderungsrahmens, der die Empfänger-ID-Informationen enthält, durch die Quellen-STA an die Ziel-STA; und
Empfangen eines Multiplex-Übertragungsantwortrahmens, wenn sich der Empfänger des Funkrahmens nicht in einer Umgebungs-STA-Informationsliste der Ziel-STA befindet;
das Senden eines Funkrahmens an eine Ziel-STA durch die Quellen-STA umfasst:
Senden des Daten enthaltenden Funkrahmens an die Ziel-STA.

2. Datenübertragungsverfahren nach Anspruch 1, wobei die Empfänger-ID-Informationen ein oder mehrere Teile der folgenden Informationen umfassen: einen Basisdienstsatz, BSS, Farbe, eine Basisdienstsatzidentifikation, BSSID, eine Zuordnungs-ID, AID, Teil der BSSID und Teil der AID.

3. Datenübertragungsverfahren nach Anspruch 1, wobei vor dem Erfassen durch eine Quellen-STA mit zu sendenden Daten, dass ein Funkkanal belegt ist und ein physikalischer Rahmen-Kopfteil eines Funkrahmens erfolgreich in einem Back-Off-Prozess empfangen wird, umfasst das Verfahren ferner:
Überwachen und Analysieren eines empfangenen Funkrahmens durch die Quellen-STA und Aufzeichnen einer Sender-ID und / oder Senderadresse des überwachten Funkrahmens in einer Umgebungs-STA-Informationsliste der Quellen-STA.

4. Datenübertragungsverfahren nach Anspruch 3, wobei das Überwachen und Analysieren eines empfangenen Funkrahmens durch die Quellen-STA und das Aufzeichnen einer Sender-ID und / oder Senderadresse des überwachten Funkrahmens in einer Umgebungs-STA-Informationsliste der Quellen-STA umfasst:
Überwachen und Analysieren eines empfangenen Request to Send, Rahmens, RTS, durch die Quellen-STA und Identifizieren einer ID und / oder Adresse einer entsprechenden STA, die den RTS-Rahmen sendet, und einer ID und / oder Adresse einer STA, die den RTS-Rahmen empfängt, gemäß dem empfangenen RTS-Rahmen; und
wobei nach Überwachen und Analysieren eines empfangenen RTS- Rahmen durch die Quellen-STA und Identifizieren einer ID und / oder Adresse einer entsprechenden STA, die den RTS- Rahmen sendet, und einer ID und / oder Adresse einer STA, die den RTS-Rahmen empfängt, gemäß dem empfangenen RTS- Rahmen, wobei das Verfahren ferner umfasst: Aufzeichnen einer Sender-ID und / oder einer Senderadresse, die zum Senden eines Clear To Send-, CTS-, Funkrahmens berechtigt sind und dem überwachten RTS-Rahmen entsprechen;
und
wobei vor dem Aufzeichnen einer Sender-ID und / oder Senderadresse, die zum Senden eines CTS-Funkrahmens berechtigt sind und dem überwachten RTS-Rahmen entsprechen, das Verfahren ferner umfasst:
Erfassen durch die Quellen-STA einer Sendeleistung des überwachten CTS-Rahmens und einer Reichweitenleistung des überwachten CTS-Rahmens, die die Quellen-STA erreicht, und wobei die erfasste Reichweitenleistung größer als ein voreingestellter Schwellenwert ist.

5. Datenübertragungsverfahren nach Anspruch 3, wobei das Verfahren vor dem Aufzeichnen einer Sender-ID und / oder einer Senderadresse des überwachten Funkrahmens ferner umfasst:
Erfassen einer Sendeleistung eines Senders des überwachten Funkrahmens durch die Quellen-STA und einer Reichweitenleistung des überwachten Funkrahmens, die die Quellen-STA erreicht, und wobei die erfasste Reichweitenleistung größer als ein voreingestellter Schwellenwert ist.

6. Datenübertragungsverfahren nach Anspruch 1, ferner umfassend: Erfassen einer Übertragungszeitlänge des Funkrahmens durch die Quellen-STA durch Decodieren des empfangenen physikalischen Rahmen-Kopfs des Funkrahmens;
und
wobei eine Multiplex-Übertragungszeitlänge der Quellen-STA einen Übertragungsendzeitpunkt des erfassten Funkrahmens nicht überschreitet.

7. Datenübertragungsverfahren nach Anspruch 1, wobei das Konkurrieren durch die Quellen-STA um eine Multiplex-Übertragungsmöglichkeit umfasst:
Durchführen eines Backoffs durch die Quellen-STA unter Verwendung eines dynamischen Clear-Channel-Assessments, CCA, Schwellenwerts und Erfassen der Multiplex-Übertragungsmöglichkeit, nachdem das Backoff beendet ist;
oder Erfassen der Multiplex-Übertragungsmöglichkeit nach einer zufälligen Zeitdauer durch die Quellen-STA.

8. Datenübertragungsverfahren, **gekennzeichnet durch**:
Empfangen einer Multiplex-Übertragungsanforderung, die eine Empfänger-ID-Information eines Funkrahmens von einer Quellen-STA trägt, durch eine Zielstation STA, wenn die Quellen-STA feststellt, dass sich ein Empfänger des Funkrahmens nicht in einer Umgebungs-STA-Informationsliste der Quellen-STA befindet; und
nach dem Erkennen, dass der Empfänger des Funkrahmens nicht in einer Umgebungs-STA-Informationsliste der Ziel-STA enthalten ist, Erfassen, dass ein Medium, das gegenwärtig eine drahtlose Übertragung ausführt, gemultiplext werden kann, und Zurücksenden eines Multiplex-Übertragungsantwortrahmens an die Quellen-STA; und
Empfangen eines Funkrahmens, der Daten von der Quellen-STA trägt.

9. Datenübertragungsverfahren nach Anspruch 8, wobei das Verfahren vor dem Empfangen einer Multiplex-Übertragungsanforderung durch eine Ziel-STA ferner Folgendes umfasst: Überwachen und Analysieren eines empfangenen Funkrahmens durch die Ziel-STA und Aufzeichnen einer Senderidentifikation, ID und / oder Senderadresse des überwachten Funkrahmens in einer Umgebungs-STA-Informationsliste der Ziel-STA;
und
wobei vor dem Aufzeichnen einer Sender-ID und / oder Senderadresse des überwachten Funkrahmens das Verfahren ferner umfasst:
Erfassen einer Sendeleistung eines Senders des überwachten Funkrahmens durch die Ziel-STA und einer Reichweitenleistung des überwachten Funkrahmens, die die Ziel-STA erreicht, und wobei die erfasste Reichweitenleistung größer als ein voreingestellter Schwellenwert ist.

10. Station, STA, umfassend: ein Aufzeichnungsmodul (31), ein erstes Bestimmungsmodul (32) und ein Sendemodul (33), wobei
das Aufzeichnungsmodul (31) so konfiguriert ist, dass es in einem Back-Off-Prozess erkennt, dass ein Funkkanal belegt ist und ein physikalischer RahmenKopf-Teil eines Funkrahmens erfolgreich empfangen wird, wenn Daten gesendet werden müssen;
das erste Bestimmungsmodul (32) konfiguriert ist, um zu bestimmen, dass ein Medium, das gegenwärtig eine drahtlose Übertragung ausführt, gemäß einer Empfängeridentifikation, ID, - Information, die in dem empfangenen physischen Rahmen-Kopfteil des Funkrahmens enthalten ist, gemultiplext werden kann, um eine Multiplex-Übertragungsmöglichkeit zu konkurrieren, und Benachrichtigen des Sendemodul beim Empfang der Möglichkeit zur Multiplexübertragung; und
das Sendemodul (33) konfiguriert ist, um eine Benachrichtigung von dem ersten Bestimmungsmodul zu empfangen und einen Funkrahmen an eine Ziel-STA zu senden;
**dadurch gekennzeichnet, dass**:
das erste Bestimmungsmodul (32) ist konfiguriert, um zu erfassen, dass sich ein Empfänger des Funkrahmens nicht in einer Umgebungs-STA-Informationsliste der Quellen-STA befindet, einen Multiplex-Übertragungsanforderungsrahmen zu senden, der die Empfänger-ID-Informationen an die Ziel-STA überträgt, und einen Multiplex-Übertragungsantwortrahmen zu empfangen, wenn sich der Empfänger des Funkrahmens nicht in einer Umgebungs-STA-Informationsliste der Ziel-STA befindet;
das Sendemodul (33) ist konfiguriert, um den datentragenden Funkrahmen an die Ziel-STA zu senden.

11. Computerlesbares Speichermedium, in dem eine computerausführbare Anweisung gespeichert ist, wobei die computerausführbare Anweisung zum Ausführen des Verfahrens nach einem der Ansprüche 1 bis 9 verwendet wird.

## Revendications

1. Procédé de transmission de données comprenant :
la détection (200), par une station, STA, source ayant des données à envoyer, qu'un canal radio est occupé et qu'une partie d'en-tête de trame physique d'une trame radio est reçue avec succès dans un processus de back-off (temporisation) ;
la détermination (201), par la STA source, qu'un milieu transportant actuellement une transmission sans fil peut être multiplexé en fonction d'informations d'identification, ID, de destinataire transportées dans la partie d'en-tête de trame physique reçue de la trame radio, et l'entrée en concurrence, par la STA source, pour une opportunité de transmission à multiplexage ; et
l'envoi (202), par la STA source, d'une trame radio à une STA de destination après l'acquisition de l'opportunité de transmission par multiplexage ;
**caractérisé en ce que** :
dans lequel la détermination, par la STA source, qu'un milieu transportant actuellement une transmission sans fil peut être multiplexé en fonction d'informations d'ID de destinataire transportées dans la partie d'entête de trame physique reçue de la trame radio comprend :
la détection, par la STA source, qu'un destinataire de la trame radio n'est pas dans une liste d'informations de STA environnantes de la STA source ;
l'envoi, par la STA source, d'une trame de requête de transmission à multiplexage transportant les informations d'ID de destinataire à la STA de destination ; et
la réception d'une trame de réponse de transmission à multiplexage quand le destinataire de la trame radio n'est pas dans une liste d'informations de STA environnantes de la STA de destination ;
l'envoi, par la STA source, d'une trame radio à une STA de destination comprend :
l'envoi de la trame radio transportant des données à la STA de destination.

2. Procédé de transmission de données selon la revendication 1, dans lequel les informations d'ID de destinataire comprennent un ou plusieurs éléments des informations suivantes : une couleur d'ensemble de services de base, BSS, une identification d'ensemble de services de base, BSSID, une partie d'ID d'association, AID, de la BSSID et une partie de l'AID.

3. Procédé de transmission de données selon la revendication 1, dans lequel, avant la détection, par une STA source ayant des données à envoyer, qu'un canal radio est occupé et qu'une partie d'en-tête de trame physique d'une trame radio est reçue avec succès dans un processus de back-off, le procédé comprend en outre :
la surveillance et l'analyse syntaxique, par la STA source, d'une trame radio reçue, et l'enregistrement d'une ID d'envoyeur et/ou d'une adresse d'envoyeur de la trame radio surveillée dans une liste d'informations de STA environnantes de la STA source.

4. Procédé de transmission de données selon la revendication 3, dans lequel la surveillance et l'analyse syntaxique, par la STA source, d'une trame radio reçue, et l'enregistrement d'une ID d'envoyeur et/ou d'une adresse d'envoyeur de la trame radio surveillée dans une liste d'informations de STA environnantes de la STA source comprend :
la surveillance et l'analyse syntaxique, par la STA source, d'une trame de requête d'envoi (Request to Send), RTS, reçue, et l'identification, en fonction de la trame RTS reçue, d'une ID et/ou d'une adresse d'une STA correspondante qui envoie la trame RTS, et d'une ID et/ou d'une adresse d'une STA qui reçoit la trame RTS ;
et
dans lequel, après la surveillance et l'analyse syntaxique, par la STA source, d'une trame RTS reçue, et l'identification, en fonction de la trame RTS reçue, d'une ID et/ou d'une adresse d'une STA correspondante qui envoie la trame RTS, et d'une ID et/ou d'une adresse d'une STA qui reçoit la trame RTS, le procédé comprend en outre : l'enregistrement d'une ID d'envoyeur et/ou d'une adresse d'envoyeur autorisée pour envoyer une trame radio libre pour l'envoi (Clear to Send), CTS, et correspondant à la trame RTS surveillée ;
et
dans lequel, avant l'enregistrement d'une ID d'envoyeur et/ou d'une adresse d'envoyeur autorisée pour envoyer une trame radio CTS et correspondant à la trame RTS surveillée, le procédé comprend en outre :
l'acquisition, par la STA source, d'une puissance de transmission de la trame RTS surveillée et d'une puissance d'arrivée de la trame RTS surveillée arrivant à la STA source, et la puissance d'arrivée acquise étant supérieure à un seuil prédéfini.

5. Procédé de transmission de données selon la revendication 3, dans lequel, avant l'enregistrement d'une ID d'envoyeur et/ou d'une adresse d'envoyeur de la trame radio surveillée, le procédé comprend en outre :
l'acquisition, par la STA source, d'une puissance de transmission d'un envoyeur de la trame radio surveillée et d'une puissance d'arrivée de la trame radio surveillée arrivant à la STA source, et la puissance d'arrivée acquise étant supérieure à un seuil prédéfini.

6. Procédé de transmission de données selon la revendication 1, comprenant en outre : l'acquisition, par la STA source, d'une longueur de temps de transmission de la trame radio en décodant l'en-tête de trame physique reçue de la trame radio ;
et
dans lequel une longueur de temps de transmission à multiplexage de la STA source ne dépasse pas un point temporel de fin de transmission de la trame radio acquise.

7. Procédé de transmission de données selon la revendication 1, dans lequel l'entrée en concurrence, par la STA source, pour une opportunité de transmission à multiplexage comprend :
l'exécution, par la STA source, d'un back-off en utilisant un seuil d'évaluation de canal libre, CCA, dynamique, et l'acquisition de l'opportunité de transmission à multiplexage après qu'un back-off est terminé ;
ou, l'acquisition, par la STA source, de l'opportunité de transmission à multiplexage après une longueur de temps aléatoire.

8. Procédé de transmission de données **caractérisé en ce qu'**il comprend :
la réception, par une station, STA, de destination d'une requête de transmission à multiplexage transportant une information d'ID de destinataire d'une trame radio à partir d'une STA source quand la STA source détecte qu'un destinataire de la trame radio n'est pas dans une liste d'informations de STA environnantes de la STA source ; et
après la découverte que le destinataire de la trame radio n'est pas dans une liste d'informations de STA environnantes de la STA de destination, la détection qu'un milieu transportant actuellement une transmission sans fil peut être multiplexé, et le renvoi d'une trame de réponse de transmission à multiplexage à la STA source ; et
la réception d'une trame radio transportant des données à partir de la STA source.

9. Procédé de transmission de données selon la revendication 8, dans lequel, avant la réception, par une STA de destination, d'une requête de transmission à multiplexage, le procédé comprend en outre : la surveillance et l'analyse syntaxique, par la STA de destination, d'une trame radio reçue, et l'enregistrement d'une identification, ID, d'envoyeur et/ou d'une adresse d'envoyeur de la trame radio surveillée dans une liste d'informations de STA environnantes de la STA de destination ;
et
dans lequel, avant l'enregistrement d'une ID d'envoyeur et/ou d'une adresse d'envoyeur de la trame radio surveillée, le procédé comprend en outre :
l'acquisition, par la STA de destination, d'une puissance de transmission d'un envoyeur de la trame radio surveillée et d'une puissance d'arrivée de la trame radio surveillée arrivant à la STA de destination, et la puissance d'arrivée acquise étant supérieure à un seuil prédéfini.

10. Station, STA, comprenant : un module d'enregistrement (31), un premier module de détermination (32) et un module de transmission (33), dans laquelle
le module d'enregistrement (31) est configuré pour, dans un processus de back-off (temporisation), détecter qu'un canal radio est occupé et qu'une partie d'en-tête de trame physique d'une trame radio est reçue avec succès quand il existe des données à envoyer ;
le premier module de détermination (32) est configuré pour déterminer qu'un milieu transportant actuellement une transmission sans fil peut être multiplexé en fonction d'informations d'identification, ID, de destinataire transportées dans la partie d'en-tête de trame physique reçue de la trame radio, entrer en concurrence pour une opportunité de transmission à multiplexage, et notifier au module de transmission le moment de l'acquisition de l'opportunité de transmission à multiplexage ; et
le module de transmission (33) est configuré pour recevoir une notification à partir du premier module de détermination et envoyer une trame radio à une STA de destination ;
**caractérisé en ce que** :
le premier module de détermination (32) est configuré pour détecter qu'un destinataire de la trame radio n'est pas dans une liste d'informations de STA environnantes de la STA source, envoyer une trame de requête de transmission à multiplexage transportant les informations d'ID de destinataire à la STA de destination, et recevoir une trame de réponse de transmission à multiplexage quand le destinataire de la trame radio frame n'est pas dans une liste d'informations de STA environnantes de la STA de destination ;
le module de transmission (33) est configuré pour envoyer la trame radio transportant des données à la STA de destination.

11. Support de stockage lisible par ordinateur, dans lequel une instruction exécutable par ordinateur est stockée, dans lequel l'instruction exécutable par ordinateur est utilisée pour exécuter le procédé selon l'une quelconque des revendications 1 à 9.
